# FASCICULE DE BREVET EUROPEEN

(11) **EP 3 181 522 B1**
(45) Date de publication et mention de la délivrance du brevet: **20.06.2018**
(21) Numéro de dépôt: 16203995.2
(22) Date de dépôt: 14.12.2016
(51) Int. Cl.: C02F 1/72, B01D 53/50, B01D 53/94, C02F 1/66, C02F 103/18

(54) **PROCÉDÉ D'ÉPURATION DES EFFLUENTS LIQUIDES D'UN LAVEUR HUMIDE DE DÉSULFURATION DE FUMÉES D'ÉCHAPPEMENT D'UN MOTEUR MARIN, AINSI QUE PROCÉDÉ DE TRAITEMENT DE TELLES FUMÉES**
VERFAHREN ZUR REINIGUNG VON ABWÄSSERN AUS EINEM NASSWÄSCHER ZUR ENTSCHWEFELUNG VON ABGASEN EINES SCHIFFSMOTORS UND VERFAHREN ZUR BEHANDLUNG DERARTIGER ABGASE
METHOD FOR PURIFYING LIQUID EFFLUENTS OF A WET SCRUBBER FOR DESULFURIZATION OF THE EXHAUST FUMES FROM A MARINE ENGINE, AS WELL AS METHOD FOR TREATING SUCH FLUE GAS

(30) Priorité: 15.12.2015 FR 1562345
(43) Date de publication de la demande: 21.06.2017
(73) Titulaire: LAB SA, 69007 Lyon (FR)
(72) Inventeur: SIRET, Bernard, 69200 Venissieux (FR); TABARIES, Frank, 83430 Saint Mandrier sur Mer (FR)
(74) Mandataire: Lavoix

(56) Documents cités:
- EP-A1- 2 347 816
- WO-A1-2011/085908
- WO-A1-2014/128261
- US-A1- 2005 161 410
- US-A1- 2015 231 558

## Description

La présente invention concerne un procédé d'épuration des effluents liquides d'un laveur humide de désulfuration de fumées d'échappement émises par un moteur d'un navire marin. Elle concerne également un procédé de traitement des fumées d'échappement émises par un moteur d'un navire marin.

Les navires marins, que ce soient des paquebots ou d'autres navires, utilisent des combustibles soufrés, en particulier du fuel tel que le HFO, comme carburant pour les moteurs assurant leur propulsion. Ces combustibles soufrés contiennent jusqu'à 5% en masse de soufre, le plus souvent entre 0,5 et 3,5% en masse. Lors du processus de combustion dans les moteurs, ce soufre est transformé en dioxyde de soufre (SO₂). Par conséquent, les fumées brutes qui s'échappent de ces moteurs sont acides et nocives et elles doivent être épurées avant d'être rejetées à l'atmosphère.

La technologie la plus couramment proposée consiste à laver les fumées à épurer en utilisant de l'eau de mer qui circule en boucle ouverte ou en boucle fermée dans un laveur à l'intérieur duquel les fumées circulent : dans ce laveur, le dioxyde de soufre est capturé par l'eau de mer grâce à l'alcalinité de cette dernière. Dans certaines situations, par exemple lorsque le navire est dans un port, on doit ajouter un surcroît d'alcalinité par un réactif basique comme la soude ou la magnésie, et aussi lorsque le laveur opère en boucle fermée. Un exemple de cette technologie est fourni par WO 2014/128261 sur lequel est basé le préambule de la revendication 1.

Le dioxyde de soufre capté dans le laveur par le liquide de lavage, constitué en général d'eau de mer fraîche ou d'une saumure provenant d'eau de mer ayant déjà circulé dans le laveur, n'est que partiellement oxydé. Dans les effluents liquides sortant du laveur, ce dioxyde de soufre se retrouve sous forme de sulfites, d'hydrogénosulfites ou d'acide sulfureux selon le pH des effluents. Ces effluents sont donc réducteurs et agressifs vis-à-vis des matériaux, ainsi que néfastes pour l'environnement du fait qu'ils possèdent une demande en oxygène importante. Aussi, il est indispensable de procéder à l'oxydation de ces effluents pour en transformer les sulfites, les hydrogénosulfites et/ou l'acide sulfureux en sulfates.

De plus, les effluents sortant du laveur, qui constituent la purge liquide du système et qui sont plus ou moins concentrés selon que le laveur opère en boucle ouverte ou en boucle fermée, contiennent de nombreux polluants que sont des métaux lourds, des métaux de transition et des composés organiques, comme des huiles et des goudrons. Ces polluants doivent être épurés avant évacuation des effluents. A cette fin, des filtres ou des hydrocyclones sont communément utilisés, mais cette solution n'est que partiellement satisfaisante : les filtres occupent un très gros volume à cause des vitesses de filtration très faibles requises, ce qui n'est pas acceptable à bord des navires, tandis que les hydrocyclones n'ont qu'un pouvoir de coupure limité et laissent passer les fines particules, qui sont toxiques.

Le but de la présente invention est d'améliorer l'épuration des effluents liquides issus du lavage des fumées d'épuration de moteurs marins.

A cet effet, l'invention a pour objet un procédé d'épuration des effluents liquides d'un laveur humide de désulfuration de fumées d'échappement émises par un moteur d'un navire marin, tel que défini à la revendication 1.

Ainsi, une des idées à la base de l'invention est de faire jouer au fer un double rôle, en l'associant aux particules solides finement divisées : d'une part, le fer est utilisé pour catalyser, en particulier dans le laveur de désulfuration, l'oxydation des sulfites, des hydrogénosulfites et de l'acide sulfureux en sulfates ; d'autre part, le fer sert, en particulier dans le dispositif de traitement dont le pH est relevé sous l'effet de l'agent alcalin qui y est introduit, de précipiteur-floculeur, les hydroxydes de fer et les autres hydroxydes de métaux qui précipitent entraînant les polluants autres que les composés du soufre, en particulier les goudrons, huiles et autres organiques, en étant assisté en cela par le tensioactif. Ainsi, l'invention offre une solution permettant à la fois une oxydation efficace des effluents d'un laveur de désulfuration et leur traitement par floculation-précipitation, de manière intégrée.

Des caractéristiques additionnelles avantageuses du procédé d'épuration conforme à l'invention sont spécifiées aux revendications 2 à 8.

L'invention a également pour objet un procédé de traitement des fumées d'échappement émises par un moteur d'un navire marin, tel que défini à la revendication 9.

L'invention sera mieux comprise à la lecture de la description qui va suivre, donnée uniquement à titre d'exemple et faite en se référant aux dessins sur lesquels :
- la figure 1 est une vue schématique d'une installation mettant en oeuvre des procédés d'épuration et de traitement conformes à l'invention ; et
- la figure 2 est une vue similaire à la figure 1, illustrant une disposition optionnelle de l'invention.

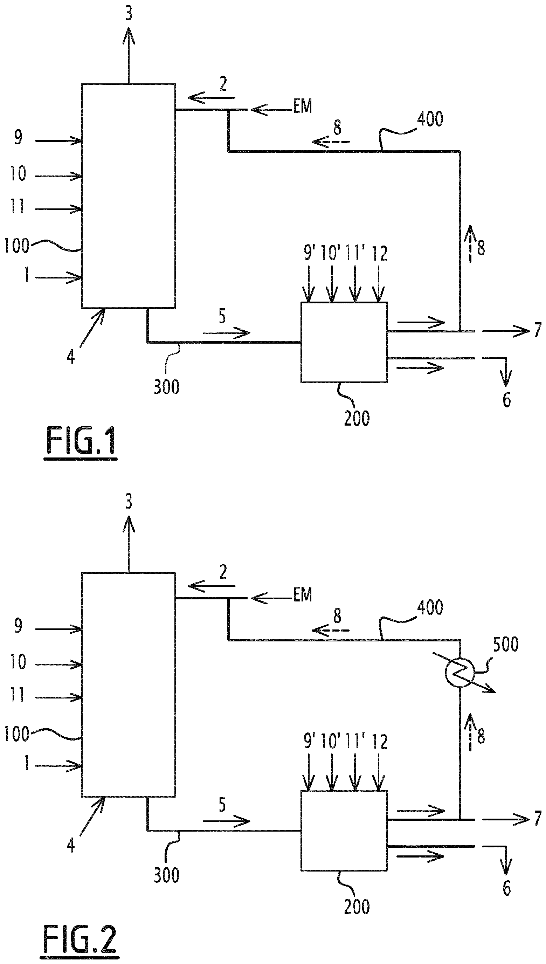

Sur la figure 1 est représentée une installation permettant de traiter des fumées d'échappement 1 émises par un moteur assurant la propulsion d'un navire marin sur lequel est embarquée cette installation. Ce moteur est alimenté avec un combustible soufré, notamment du fuel, par exemple HFO, de sorte que les fumées 1 contiennent, entre autres, du dioxyde de soufre.

L'installation comprend deux blocs fonctionnels, à savoir un laveur humide 100 de désulfuration des fumées 1 et un dispositif 200 de traitement des effluents liquides du laveur 100. L'installation comporte également une ligne 300 de raccordement entre le laveur 100 et le dispositif de traitement 200, cette ligne de raccordement 300 plaçant le dispositif de traitement 200 en aval du laveur 100. L'installation comprend également une ligne de recyclage 400 qui, comme expliqué plus en détail par la suite, permet de renvoyer une sortie liquide du dispositif de traitement 200 au laveur 100 dans certaines circonstances.

Le laveur 100 est d'une technologie connue en soi. Les fumées 1 ainsi qu'un liquide de lavage 2 sont introduits dans ce laveur 100 : par mise en contact des fumées 1 avec le liquide de lavage 2, le dioxyde de soufre des fumées est retiré de ces dernières en étant capté par le liquide de lavage. En pratique, le laveur 100 inclut une tour de lavage qui est, par exemple, à garnissage, à plateaux ou à pulvérisation en pluie. Les fumées sortant de cette tour de lavage sont ainsi épurées et forment, en sortie du laveur 100, un flux 3 rejeté à l'atmosphère. Les effluents liquides 5 du laveur sont envoyés au dispositif de traitement 200 via la ligne de raccordement 300.

A titre optionnel, le laveur 100 peut également inclure un bac d'oxydation, dans lequel de l'air 4 est introduit. En pratique, ce bac d'oxydation est soit intégré à la tour de lavage, soit en est séparé, soit n'existe pas si la tour de lavage possède en elle-même assez de capacité d'oxydation.

Le liquide de lavage 2 est constitué d'eau de mer EM, mélangée, le cas échéant, à de la soude ou de la magnésie. Plus précisément, lorsque le laveur 100 opère en boucle ouverte, l'eau de mer du liquide de lavage 2 est fraîche, tandis que, lorsque le laveur 100 opère en boucle fermée, le liquide de lavage 2 contient, voire est constitué de saumures provenant du dispositif de traitement 200, comme expliqué par la suite.

Lors de la circulation du liquide de lavage 2 dans le laveur 100, ce liquide se charge de polluants divers qui peuvent être répartis en deux catégories. D'une part, des polluants résultent de la captation des oxydes de soufre contenus dans les fumées 1, ces oxydes étant la raison principale d'exploitation du laveur 100. Dans les effluents 5, ces oxydes de soufre se retrouvent pour partie sous forme de soufre à l'état d'oxydation (+4), c'est-à-dire sous forme de sulfites, d'hydrogénosulfites et/ou d'acide sulfureux selon le pH des effluents 5, ainsi que sous forme de soufre à l'état d'oxydation (+6), c'est-à-dire sous forme de sulfates. D'autre part, comme le combustible soufré utilisé pour la propulsion du navire contient des métaux lourds et aussi certains métaux de transition comme le vanadium, on retrouve dans les effluents 5 ces métaux, qui sont toxiques. On trouve également dans les effluents 5 des produits organiques résultant d'une combustion incomplète par le moteur du navire. Tous ces polluants sont bien plus concentrés quand le laveur 100 opère en boucle fermée, typiquement avec une purge de l'ordre de 1 à 3 m³/heure, que lorsque le laveur travaille en boucle ouverte, typiquement avec une purge de l'ordre de 600 à 1500 m³/heure, pour un même débit, de l'ordre de 140 000 Nm³/heure, de fumées 1 entrantes. Néanmoins, dans tous les cas, les effluents constitués de ces purges sont à épurer par le dispositif de traitement 200.

A cet effet, le dispositif de traitement 200 permet, à la fois, de diminuer le caractère réducteur des effluents 5, qui est toxique pour le milieu marin et agressif pour les matériaux, et de retenir les métaux et autres particules, ainsi que les produits organiques, tels que les huiles et goudrons issus de la combustion, qui sont eux aussi toxiques.

Pour ce faire, le dispositif de traitement 200 inclut des matériels de séparation relevant de technologies connues en soi. Ainsi, le dispositif de traitement 200 inclut, par exemple et de manière non limitative, des hydrocyclones, des décanteurs, des centrifugeuses et/ou des filtres. Une forme de réalisation avantageuse consiste en un hydrocyclone ou une cascade d'hydrocyclones, dont la sousverse peut être envoyée à un décanteur, en particulier un décanteur lamellaire. Dans tous les cas, le dispositif de traitement 200 est adapté pour séparer les effluents 5 en une boue 6 et une fraction claire 7, cette séparation étant avantageusement réalisée au moins en partie par une séparation basée sur une différence de densité, en particulier par décantation lamellaire. La boue 6 est évacuée en totalité de l'installation, en étant relarguée ou bien stockée pour un traitement approprié ultérieur. La fraction claire 7 peut être soit totalement évacuée de l'installation, soit au moins partiellement recyclée au laveur 100, via la ligne de recyclage 400, sous forme d'un flux 8, constituant, en entrée du laveur 100, au moins une partie du liquide de lavage 2. En pratique, lorsque le laveur 100 opère en boucle ouverte, la totalité de la fraction claire 7 est évacuée, tandis que, lorsque le laveur 100 opère en boucle fermée, le flux 8 est formé d'une majeure partie de la fraction claire 7, par exemple plus de 95%.

Afin de catalyser et donc d'accélérer l'oxydation des sulfites en sulfates dans les liquides circulant au sein du laveur 100 et dans les effluents 5, un catalyseur contenant du fer est envoyé au laveur 100, soit sous forme d'un flux 9 introduit directement au laveur 100, soit sous forme d'un flux 9' introduit au dispositif de traitement 200 d'où le catalyseur rejoint le laveur 100 par retour de la fraction recyclée 8. Bien entendu, les deux flux de catalyseur 9 et 9' peuvent coexister. Dans le catalyseur des flux 9 et/ou 9', le fer peut, par exemple, être sous forme de chlorure ferrique FeCl₃. Ce catalyseur peut contenir d'autres éléments, comme du cuivre et du manganèse par exemple.

De façon à provoquer dans le dispositif de traitement 200 la floculation et la précipitation des métaux présents dans les effluents 5 et à entraîner aussi les composés organiques des effluents 5 avec les précipités de métaux, on a recours à la fois des particules solides finement divisées, un tensioactif et un agent alcalin, comme expliqué plus en détail ci-dessous.

Les particules solides précitées sont considérés finement divisées en ce que leur taille est inférieure à 300 µm, de préférence inférieure à 100 µm. Ces particules solides sont introduites soit au laveur 100 sous forme d'un flux 10, soit au dispositif de traitement 200 sous forme d'un flux 10'. Bien entendu, les deux flux 10 et 10' peuvent coexister. Ces particules solides sont par exemple constituées d'oxyde de fer Fe₂O₃ et/ou d'argiles finement divisées, telles que de la bentonite, de la sépiolite ou de la terre d'infusoire de manière non limitative. Le cas échéant, au niveau du laveur 100, le flux de particules solides 10 et le flux de catalyseur 3 peuvent être fusionnés en un même flux contenant à la fois le catalyseur et les particules solides finement divisées. Il peut en être de même pour le flux de catalyseur 9' et le flux de particules solides 10' au niveau du dispositif de traitement 200.

Suivant des considérations similaires, le tensioactif est introduit au laveur 100, sous forme d'un flux 11, et/ou au dispositif de traitement 200, sous forme d'un flux 11'.

L'agent alcalin vise à remonter le pH dans le dispositif de traitement 200 pour précipiter les hydroxydes de métaux, en particulier l'hydroxyde de fer. Cet agent alcalin, qui est notamment de la soude ou de la magnésie, est introduit au dispositif de traitement 200 sous forme d'un flux 12. Les précipités d'hydroxyde de fer et d'autres hydroxydes métalliques forment, dans le dispositif de traitement 200, des floculats qui adsorbent les polluants organiques des effluents 5, cette adsorption étant favorisée par le tensioactif des flux 11 et/ou 11'. Ces floculats sont concentrés par les matériels de séparation du dispositif de traitement 200 pour former la boue 6, tandis que la solution liquide qui est séparée de ces floculats forme la fraction claire 7. Grâce au flux d'agent alcalin 6, le pH de la fraction claire 7 est plus élevé que le pH des effluents 5, ce qui contribue à éviter que, en cas d'éjection à la mer d'au moins une partie de la fraction claire 7, le pH de l'eau dans lequel est le navire se retrouve en dessous de 6,5 à 4 mètres du point d'éjection à la mer.

En pratique, au sein de l'installation, les divers flux 9, 9', 10, 10', 11, 11' et 12 sont introduits par des moyens ad hoc, non représentés en détail sur la figure 1.

Ainsi, selon l'invention, le fer introduit dans l'installation joue un double rôle. C'est d'abord un catalyseur d'oxydation, pour oxyder le soufre de l'état (+4) à l'état (+6), qui est non toxique. C'est aussi un agent floculant qui, lors de la précipitation dans le dispositif de traitement 200 induite par l'agent alcalin du flux 12, va entraîner les polluants métalliques et les composés organiques, tels que huiles et goudrons, qui s'adsorbent aux précipités avec le concours du tensioactif.

Il est particulièrement avantageux que les particules solides finement divisées contiennent de l'oxyde de fer Fe₂O₃ pour au moins deux raisons. Ce produit est disponible économiquement avec une grande finesse et le fer est connu pour ses propriétés catalytiques en catalyse hétérogène. De plus, au contact des effluents acides 5, une partie de l'oxyde de fer se solubilise dans les effluents, induisant ainsi de la catalyse homogène. Suivant une mise en oeuvre avantageuse, la masse de particules solides introduites par les flux 10 et 10' est cinq à vingt fois plus grande que celle de fer soluble introduit par les flux 9 et 9'.

La présence d'argiles finement divisées apporte, quant à elle, l'avantage de renforcer les propriétés d'adsorption vis-à-vis des polluants organiques des effluents 5.

Quelle que soit la nature des particules solides finement divisées, leur présence apporte l'avantage additionnel que de fines bulles d'air ou de fumées contenant de l'oxygène viennent se coller aux particules solides, augmentant ainsi la surface totale offerte au transfert gaz-liquide de l'oxygène vers les effluents 5, aidant à l'oxydation du soufre à l'état (+4) à l'état (+6).

Sur la figure 2 est représentée l'installation de la figure 1, complétée par une disposition optionnelle de l'invention. Dans cette variante, l'installation comporte un échangeur de chaleur 500 qui est agencé sur la ligne de recyclage 400, autrement dit qui est placé dans la boucle de recyclage de la fraction recyclée 8 depuis le dispositif de traitement 200 au laveur 100. Comparativement à la situation de la figure 1, cet échangeur de chaleur 500 permet d'abaisser d'au moins 5°C, de préférence d'au moins 20°C, la température de la fraction recyclée 8 circulant dans la ligne de recyclage 400.

En abaissant ainsi la température de la fraction recyclée 8, les particules solides, introduites par les flux 10 et/ou 10', sont aidées à conserver leur forme finement divisée, en évitant leur agglomération ou leur agrégation. En effet, une telle agglomération ou agrégation est directement impactée par le potentiel zeta (ζ) qui doit être aussi faible que possible, le plus négatif possible : ce potentiel zeta, qui caractérise la charge qu'acquièrent des solides, est, toute chose étant égale par ailleurs, impacté par la température et il est connu qu'une élévation de température augmente le potentiel zeta. En abaissant la température de la fraction recyclée 8, on diminue, dans le laveur 100 et le dispositif de traitement 200, le potentiel zeta des particules solides introduites par les flux 10 et 10' de sorte que ces particules solides remplissent bien leur fonction d'adsorbants et de porteurs de fines bulles d'air ou de fumées, contribuant ainsi d'autant plus au transfert gaz-liquide que les solides restent divisés. L'abaissement de température augmente par ailleurs la solubilité de l'oxygène dans les effluents 5. Autrement dit, la présence de l'échangeur de chaleur 500 accroît l'efficacité des particules solides introduites par les flux 10 et/ou 10', tant pour l'oxydation que pour l'adsorption, en particulier dans le laveur 100, tout particulièrement lorsque ce dernier inclut une tour de lavage à garnissage.

Par ailleurs, de manière connue en soi, la performance de lavage du laveur 100 est meilleure lorsque le laveur opère à basse température.

## Revendications

1. Procédé d'épuration des effluents liquides d'un laveur humide de désulfuration de fumées d'échappement émises par un moteur d'un navire marin, dans lequel :
- les effluents à épurer (5) sont, en sortie du laveur (100), envoyés à un dispositif de traitement (200) dans lequel les effluents sont séparés en une boue (6), qui est évacuée, et une fraction claire (7) qui est évacuée lorsque le laveur opère en boucle ouverte et qui est au moins partiellement recyclée au laveur lorsque le laveur opère en boucle fermée, et
- un agent alcalin (12) est introduit au dispositif de traitement (200),
le procédé étant **caractérisé en ce qu'**un catalyseur d'oxydation (9 ; 9' ; 9, 9'), contenant du fer, est envoyé au laveur (100), en étant introduit au laveur et/ou en étant introduit au dispositif de traitement (200) pour rejoindre le laveur par recyclage d'au moins une partie (8) de la fraction claire (7),
**en ce que** des particules solides (10 ; 10' ; 10, 10'), ayant une taille inférieure à 300 µm, sont introduites au laveur (100) et/ou au dispositif de traitement (200), et
**en ce qu'**un tensioactif (11 ; 11' ; 11, 11') est introduit au laveur (100) et/ou au dispositif de traitement (200).

2. Procédé suivant la revendication 1, dans lequel les particules solides (10 ; 10' ; 10, 10') ont une taille inférieure à 100 µm.

3. Procédé suivant l'une des revendications 1 ou 2, dans lequel les particules solides (10 ; 10' ; 10, 10') sont constituées au moins pour partie d'oxyde de fer Fe₂O₃.

4. Procédé suivant l'une quelconque des revendications précédentes, dans lequel, dans le dispositif de traitement (200), la boue (6) et la fraction claire (7) sont séparées l'une de l'autre au moins par différence de densité.

5. Procédé suivant la revendication 4, dans lequel, dans le dispositif de traitement (200), la boue (6) et la fraction claire (7) sont séparées l'une de l'autre au moins par décantation lamellaire.

6. Procédé suivant l'une quelconque des revendications précédentes, dans lequel l'agent alcalin (12) est de la soude.

7. Procédé suivant l'une quelconque des revendications 1 à 5, dans lequel l'agent alcalin (12) est de la magnésie.

8. Procédé suivant l'une quelconque des revendications précédentes, dans lequel, avant d'être retournée au laveur (100), la fraction claire (7) est, pour sa partie (8) qui est recyclée, refroidie par un échangeur de chaleur (500).

9. Procédé de traitement des fumées d'échappement émises par un moteur d'un navire marin, dans lequel :
- les fumées à traiter (1) et un liquide (2) de lavage de ces fumées sont introduits dans un laveur humide de désulfuration (100), et
- des effluents liquides (5) sortant du laveur (100) sont épurés par le procédé d'épuration conforme à l'une quelconque des revendications précédentes, la fraction claire (7) issue du dispositif de traitement (200) étant, lorsque le laveur opère en boucle fermée, au moins partiellement recyclée au laveur en tant qu'au moins une partie du liquide de lavage (2).

## Patentansprüche

1. Verfahren zur Reinigung von Abwässern eines Nasswäschers für die Entschwefelung von Abgasen, die von einem Motor eines Schiffs abgegeben werden, bei dem:
- die zu reinigenden Abwässer (5) am Ausgang des Wäschers (100) an eine Aufbereitungsvorrichtung (200) geschickt werden, in der die Abwässer getrennt werden in einen Schlamm (6), der abgeführt wird und eine Klarlauffraktion (7), die abgezogen wird, wenn der Wäscher bei offener Schleife arbeitet und die zumindest teilweise im Wäscher recycelt wird, wenn der Wäscher als geschlossene Schleife arbeitet, und
- ein alkalisches Mittel (12) in die Aufbereitungsvorrichtung (200) eingeführt wird, wobei
das Verfahren **dadurch gekennzeichnet ist, dass** ein Oxidationskatalysator (9; 9'; 9, 9'), der Eisen enthält, an den Wäscher (100) geschickt wird, wobei er in den Wäscher eingeführt wird und/oder in die Aufbereitungsvorrichtung (200) eingeführt wird, um wieder in den Wäscher durch Recyceln mindestens eines Teils (8) der Klarlauffraktion (7) zu gelangen,
dass Feststoffpartikel I(10; 10'; 10, 10'), die eine Größe kleiner als 300 µm aufweisen, in den Wäscher (100) und/oder die Aufbereitungsvorrichtung (200) eingeführt werden, und
dass ein Tensid (11; 11'; 11, 11') in den Wäscher (100) und/oder die Aufbereitungsvorrichtung (200) eingeführt wird.

2. Verfahren nach Anspruch 1, bei dem die Feststoffpartikel (10; 10'; 10, 10') von einer Größe kleiner als 100 µm sind.

3. Verfahren nach einem der Ansprüche 1 oder 2, bei dem die Feststoffpartikel (10; 10'; 10, 10') mindestens teilweise aus Eisenoxid Fe₂O₃ bestehen.

4. Verfahren nach einem beliebigen der vorhergehenden Ansprüche, bei dem in der Aufbereitungsvorrichtung (200) der Schlamm (6) und die Klarlauffraktion (7) voneinander mindestens durch dichten Unterschied getrennt werden.

5. Verfahren nach Anspruch 4, bei dem in der Aufbereitungsvorrichtung (200) der Schlamm (6) und die Klarlauffraktion (7) durch Lamellenabsetzung voneinander getrennt werden.

6. Verfahren nach einem beliebigen der vorhergehenden Ansprüche, bei dem das alkalische Mittel (12) Schwefel ist.

7. Verfahren nach einem beliebigen der Ansprüche 1 bis 5, bei dem das alkalische Mittel (12) Magnesium ist.

8. Verfahren nach einem beliebigen der vorhergehenden Ansprüche, bei dem die Klarlauffraktion (7), bevor sie in den Wäscher (100) zurückgeführt wird, für ihren Teil (8), der rezykliert wird, über einen Wärmetauscher (500) abgekühlt wird.

9. Verfahren zur Behandlung von Abgasen, die von einem Motor eines Schiffs abgegeben werden, bei dem:
- die zu behandelnden Gase (1) und eine Waschflüssigkeit (2) dieser Gase in einen Nasswäscher zur Entschwefelung (100) eingeführt werden, und
- die Abwässer (5), die den Wäscher (100) verlassen, durch das Verfahren zur Reinigung entsprechend einem der vorhergehenden Ansprüche gereinigt werden, wobei die aus der Aufbereitungsvorrichtung (200) stammende Klarlauffraktion (7) zumindest teilweise in den Wäscher als mindestens ein Teil der Waschflüssigkeit (2) rezykliert wird, wenn der Wäscher in geschlossener Schleife arbeitet.

## Claims

1. Method for purifying liquid effluents of a wet scrubber for desulfurisation of exhaust fumes emitted by an engine of a marine vessel, wherein:
- the effluents to be purified (5) are, at the outlet of the scrubber (100), sent to a treatment device (200) in which the effluents are separated into a slurry (6), which is evacuated, and a clear fraction (7), which is evacuated when the scrubber is operating in an open loop and which is at least partly recycled to the scrubber when the scrubber is operating in a closed loop, and
- an alkaline agent (12) is introduced into the treatment device (200),
the method being **characterised in that** an oxidation catalyst (9; 9'; 9, 9') containing iron is sent to the scrubber (100) by being introduced into the scrubber and/or by being introduced into the treatment device (200) to join the scrubber by recycling of at least a portion (8) of the clear fraction (7),
**in that** solid particles (10; 10'; 10, 10') having a size less than 300 µm are introduced into the scrubber (100) and/or into the treatment device (200), and
**in that** a surfactant (11; 11'; 11, 11') is introduced into the scrubber (100) and/or into the treatment device (200).

2. Method according to claim 1, wherein the solid particles (10; 10'; 10, 10') have a size less than 100 µm.

3. Method according to either claim 1 or claim 2, wherein the solid particles (10; 10'; 10, 10') are composed at least in part of iron oxide Fe₂O₃.

4. Method according to any one of the preceding claims, wherein, in the treatment device (200), the slurry (6) and the clear fraction (7) are separated from one another at least by difference in density.

5. Method according to claim 4, wherein, in the treatment device (200), the slurry (6) and the clear fraction (7) are separated from one another at least by lamellar decantation.

6. Method according to any one of the preceding claims, wherein the alkaline agent (12) is sodium hydroxide.

7. Method according to any one of claims 1 to 5, wherein the alkaline agent (12) is magnesium oxide.

8. Method according to any one of the preceding claims, wherein, before being returned to the scrubber (100), the portion (8) of the clear fraction (7) that is recycled is cooled by a heat exchanger (500).

9. Method for treating exhaust fumes emitted by an engine of a marine vessel, wherein:
- the fumes to be treated (1) and a liquid (2) for scrubbing the fumes are introduced into a wet desulfurisation scrubber (100), and
- liquid effluents (5) leaving the scrubber (100) are purified by the purification method according to any one of the preceding claims, the clear fraction (7) obtained from the treatment device (200) being, when the scrubber is operating in a closed loop, at least partly recycled to the scrubber as at least a portion of the scrubbing liquid (2).
